(19) Europäisches Patentamt
European Patent Office
Office européen des brevets

(11) **EP 2 035 783 B1**

(12) **FASCICULE DE BREVET EUROPEEN**

(45) Date de publication et mention de la délivrance du brevet:
**04.05.2011 Bulletin 2011/18**

(21) Numéro de dépôt: **07734678.1**

(22) Date de dépôt: **23.05.2007**

(51) Int Cl.:
*G01D 13/26* (2006.01)    *G01D 11/28* (2006.01)

(86) Numéro de dépôt international:
**PCT/IB2007/001376**

(87) Numéro de publication internationale:
**WO 2007/138437 (06.12.2007 Gazette 2007/49)**

(54) **MODULE INDICATEUR DE TABLEAU DE BORD**

ARMATURENBRETT-INDIKATORMODUL

DASHBOARD INDICATOR MODULE

(84) Etats contractants désignés:
**CH DE FR GB IT LI**

(30) Priorité: **24.05.2006 FR 0604705**

(43) Date de publication de la demande:
**18.03.2009 Bulletin 2009/12**

(73) Titulaire: **Sonceboz S.A.**
**2605 Sonceboz (CH)**

(72) Inventeurs:
• **SIGG, Daniel**
**CH-2605 Sonceboz (CH)**

• **ZUPPIGGER-LACHAT, Corinne**
**CH-2053 Bienne (CH)**

(74) Mandataire: **Novagraaf Technologies**
**122 rue Edouard Vaillant**
**92593 Levallois-Perret Cedex (FR)**

(56) Documents cités:
**EP-A- 1 519 159     EP-A1- 0 679 871**
**WO-A-02/052229     FR-A- 2 811 424**
**FR-A1- 2 871 564**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

Printed by Jouve, 75001 PARIS (FR)

**Description**

La présente invention concerne le domaine de l'instrumentation analogique destinée à des tableaux de bord et plus particulièrement les modules indicateurs de tableau de bord automobile.

Schématiquement, ces modules indicateurs sont constitués d'un actionneur ou moteur, souvent électromagnétique, entraînant en rotation un indicateur, nommé aussi aiguille ou pointeur.

Plus précisément, l'invention concerne un module indicateur de tableau de bord comprenant un palier, une source lumineuse, un indicateur doté d'un axe conducteur de lumière dont une partie inférieure, de diamètre extérieur D, est terminée par une extrémité, et un actionneur rotatif comportant lui-même un train d'engrenages réducteur et un arbre de sortie creux commandant le déplacement de l'indicateur, le palier recevant ledit arbre creux et présentant un diamètre intérieur, et la source lumineuse étant disposée sous ladite extrémité de l'axe conducteur et émettant de la lumière en direction de cet axe conducteur dans un angle de rayonnement $\alpha$.

Un module indicateur de ce type est par exemple décrit dans la demande de brevet européen EP 1 519 159.

Conformément à l'enseignement de cette demande de brevet, ces modules incorporent généralement une fonction d'illumination, bien souvent par le biais d'une diode électroluminescente qui envoie la lumière dans l'axe de l'arbre de rotation qui peut être soit creux, soit conducteur de lumière (transparent...). Ces modules sont généralement aptes à permettre une illumination suffisante de l'aiguille lorsqu'il s'agit d'illuminer l'indicateur dans des conditions d'utilisation nocturnes. La qualité d'illumination est alors jugée par la luminance qui est l'intensité lumineuse d'une source lumineuse dans une direction donnée, divisée par l'aire apparente de cette source dans cette même direction, exprimé en Candela/m$^2$.

Cependant, il existe une demande croissante pour une illumination diurne des tableaux de bord automobiles. Dans ce cas-là, la luminance observée sur l'aiguille n'est pas suffisante avec les modules de l'art antérieur. (Typiquement, la valeur de luminance demandée en condition diurne est comprise entre 50 et 150 Cd/m$^2$ suivant les spécifications).

On connaît aussi, par le brevet EP00679871, un moteur à arbre creux associé à un indicateur qui vient se placer sur le haut de l'arbre creux. À l'intérieur de l'arbre creux et d'un palier de guidage est placée une source de lumière sous la forme d'une diode électroluminescente. Dans cette configuration, une grande partie de la lumière émise par la diode se réfléchit sur les parois de l'arbre creux, est absorbée, et n'est donc pas utile pour l'illumination de l'indicateur. Il en résulte une grande perte de luminance au niveau du pointeur. En condition diurne, la luminosité obtenue est médiocre.

On connaît aussi la demande PCT WO00138120 qui présente un moteur à arbre transparent. Cet arbre transparent et la roue principale actionnée par le moteur ne sont qu'une seule et même pièce réalisée en un matériau transparent ou conducteur de lumière. En face de l'axe conducteur de lumière est placée une diode électroluminescente qui envoie sa lumière dans l'axe. Dans ce moteur, puisque la roue principale et l'axe ne forment qu'une seule et même pièce, il y a une grande déperdition de lumière dans la roue et en condition diurne, la luminosité obtenue au niveau de l'indicateur est médiocre.

De plus, il existe une demande croissante pour des formes d'aiguille particulières permettant le déplacement de l'aiguille indicateur sur la périphérie du cadran au lieu des formes classiques en équerre pour un déplacement dans le centre du cadran.

Dans ce cas encore, les différentes pièces nécessaires pour la réalisation de ces aiguilles sont un obstacle à la bonne illumination de l'indicateur étant donné le nombre important de surfaces de réflexions optiques et de changement de milieu physique qui induisent une perte importante de luminance.

Ainsi, les modules de l'art antérieur ne permettent pas la transmission d'un niveau d'éclairage suffisant pour une bonne visibilité de l'indicateur en usage diurne.

Le but de l'invention est de remédier à cet inconvénient en proposant un module optimisé pour permettre une visibilité de l'extrémité de l'indicateur, en lumière ambiante, sans pour autant nécessiter de modification de ses dimensions.

À cet effet, le module indicateur de tableau de bord de l'invention, par ailleurs conforme à la définition générique qu'en donne le préambule ci-dessus, est essentiellement caractérisé :

- en ce que l'arbre creux présente une surface intérieure réfléchissant ;
- en ce que le diamètre extérieur D de la partie inférieure de l'axe conducteur est compris entre 2.6 et 5.5 millimètres ;
- en ce que le rapport entre le diamètre intérieur de l'arbre creux et le diamètre intérieur dudit palier est supérieur à 0.9 ; et
- en ce que la source lumineuse est disposée à une distance H de l'extrémité basse de l'axe conducteur au maximum égale à

$$\frac{D}{2.\tan\left(\dfrac{\alpha}{2}\right)}.$$

De préférence, l'axe conducteur de lumière présente un épaulement venant en contact avec une partie supérieure de l'arbre creux.

L'indicateur est avantageusement constitué par une pièce unique moulée en une matière unique, présentant une première partie formant ledit axe conducteur de lumière et permettant l'accouplement avec ledit arbre creux de l'actionneur, et une deuxième partie s'étendant sensiblement perpendiculairement à la première partie.

Il peut également être judicieux de prévoir que l'extrémité de l'axe conducteur présente une surface bombée en forme de ménisque.

La source lumineuse peut être constituée par une diode électroluminescente, par exemple par une diode non encapsulée soudée directement sur le circuit imprimé de commande de l'actionneur par une méthode de type CMS et / ou par une diode électroluminescente de forme ogivale disposée dans l'arbre creux, ou encore par une diode encapsulée placée dans un capot moteur du module.

Par ailleurs, la deuxième partie de l'indicateur peut être prolongée par une partie recourbée délimitant un espace pour le passage du bord d'un cadran.

L'indicateur, qui présente au moins un changement d'orientation disposé entre ses première et deuxième parties, peut présenter une zone inclinée de réflexion lumineuse au niveau de chaque changement d'orientation.

Cette zone inclinée de réflexion lumineuse peut par exemple être réalisée par abrasion de la surface dudit indicateur, ou par dépôt d'une matière.

Le choix d'un diamètre d'axe conducteur dans cette fourchette de 2.6 à 5.5 millimètres, de valeur inhabituelle pour des indicateurs de ce type, apporte une solution à la déperdition d'énergie lumineuse dans l'aiguille, tout en assurant des qualités mécaniques appropriées.

Dans le but d'obtenir une illumination suffisante en conditions diurnes, une solution a priori envisageable consiste à augmenter le diamètre de l'arbre. Cependant, les modules de tableaux de bord de l'art antérieur ne permettent pas d'avoir un axe conducteur de lumière d'un diamètre extérieur supérieur à 2.5 millimètres. En effet, une augmentation du diamètre de l'arbre dans les modules de l'art antérieur implique des pertes de lumière en proportion (plus de lumière réfléchie sur les parois de l'arbre creux ou/et dans la roue de sortie actionnée par le moteur). Au final, la déperdition de lumière est trop importante. On peut envisager d'augmenter le diamètre de l'arbre de façon considérable pour pouvoir obtenir une luminance suffisante au niveau de l'aiguille, mais ceci a pour conséquence de modifier l'entre axe entre l'arbre de sortie et la roue motrice. Il faut alors modifier les dimensions du moteur tout entier afin de pouvoir placer le même train d'engrenages réducteur, ce qui n'est pas souhaitable dans une optique d'industrialisation économique.

De même, il est possible d'utiliser une diode plus puissante pour obtenir une meilleure luminosité, mais le surcoût d'une telle diode est souvent inenvisageable pour cette application automobile. De plus, ces diodes plus puissantes nécessitent une alimentation électrique plus importante qui implique une importante puissance Joule à dissiper, ce qui n'est guère appréciable pour l'application automobile.

Ainsi, un des objets de l'invention est de proposer un module indicateur présentant des dimensions standard et un palier d'épaisseur radiale limitée.

Dans le cas où l'indicateur est constitué par une pièce unique moulée dans une matière unique et comportant une partie recourbée, d'une part, il n'existe pas de changement de milieu physique lors du parcours de la lumière dans l'indicateur, ce qui n'induit pas de perte de lumière, et d'autre part la partie recourbée permet de s'affranchir d'une surface de réflexion et permet donc de limiter les pertes de lumière.

Un autre des objets de l'invention est de pouvoir proposer un module qui, tout en permettant une transmission optimisée de la lumière depuis la source lumineuse à l'indicateur, comporte un indicateur de structure simplifiée et économique.

L'invention sera mieux comprise à la lecture de la description suivante faisant référence aux dessins annexés où :

-   la figure 1 représente un moteur utilisé dans le module indicateur de tableau de bord décrit par la présente invention,
-   la figure 2 représente un module indicateur selon l'invention dans un premier mode de réalisation,
-   la figure 3 représente une vue en coupe du module indicateur de la figure précédente,
-   la figure 4 représente une vue en coupe schématique du module décrit par la présente invention,
-   la figure 5 représente une vue en coupe du module indicateur selon l'invention dans un second mode de réalisation avec le moteur de la figure 1,
-   la figure 6 représente un module indicateur, présenté sans aiguille, suivant un troisième mode de réalisation,
-   la figure 7 représente une vue en coupe du module indicateur présenté en figure précédente avec une aiguille,
-   la figure 8 représente une vue isolée d'une aiguille selon l'invention, dans un premier mode de réalisation,
-   la figure 9 représente une vue isolée d'une aiguille selon l'invention, dans un second mode de réalisation,
-   la figure 10 représente une vue isolée de la partie basse d'une aiguille présentant un épaulement, selon un mode de réalisation avantageux de la présente invention,
-   la figure 11 représente une vue en coupe d'un module indicateur selon le mode avantageux de réalisation de la présente invention.

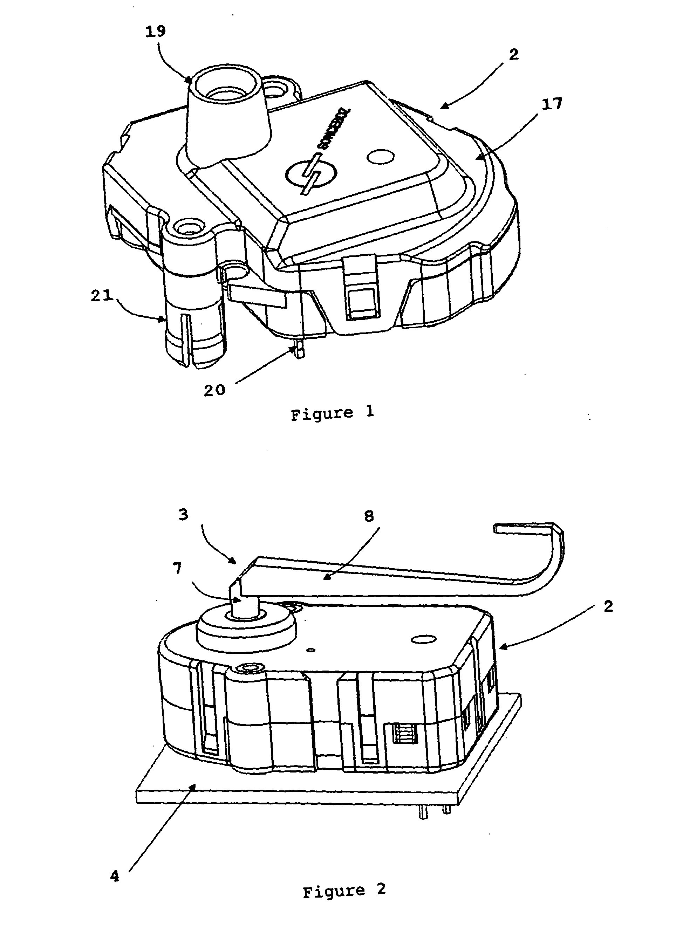

La figure 1 représente un actionneur (2) dans un premier mode de réalisation typiquement utilisé dans le présent module indicateur. Il se compose d'un corps (17) généralement en plastique contenant communément un moteur électromagnétique (18), un train d'engrenage réducteur (10) et une roue ou axe de sortie creuse (5) mobile en rotation actionnée par ledit moteur électromagnétique (18). L'actionneur (2) comprend aussi une protubérance (19) servant de palier pour guider une aiguille (3), non visible ici, venant être reliée par complémentarité à l'axe creux (5). Cet actionneur (2) est destiné à être placé et connecté à un circuit imprimé (4) par le biais de patte de connexion électrique (20) et des éléments de guidage et maintien mécanique (21).

La figure 2 présente un module d'indicateur (1) pour tableau de bord composé d'un actionneur (2) électrique et d'une aiguille ou indicateur (3). Ce module (1) est généralement fixé soudé à un circuit imprimé (4) qui le supporte et l'ensemble est destiné à être placé dans un tableau de bord automobile pour indiquer différents états de l'automobile (jauge à carburant, tachymètre, compte-tours...). L'actionneur (2) présente une forme et des dimensions standard pour cette application. Le module (1) présente une aiguille (3) en un matériau conducteur de lumière en forme de C présentant une première partie (7) formant un axe pour l'accouplement avec l'arbre creux de l'actionneur et une deuxième partie (8) s'étendant sensiblement perpendiculairement et prolongée par une partie recourbée délimitant un espace pour le passage du bord du cadran. Cette aiguille ne forme qu'une seule pièce unique, ce qui permet de limiter les pertes de lumière au niveau des changements d'orientation des différentes parties de l'aiguille (3).

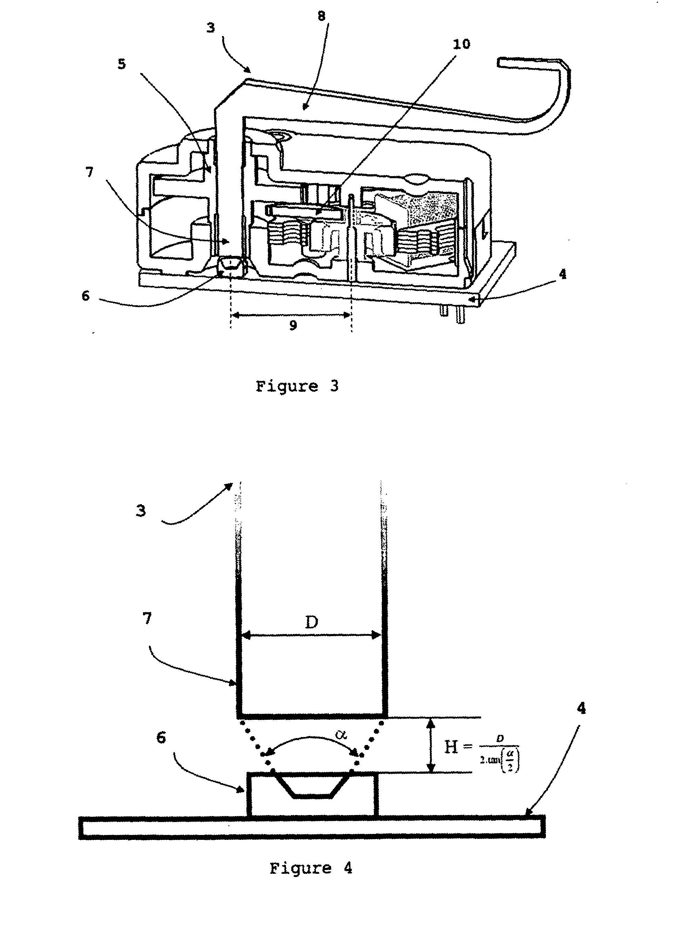

La figure 3 détaille l'intérieur du module (1) présenté en figure précédente. L'aiguille (3) présente une première partie (7) s'accouplant avec l'axe creux (5) de l'actionneur (2). Le diamètre D de cette partie (7) de type cylindrique est compris entre 2.6 et 5.5 mm et permet ainsi de collecter de façon optimale la lumière générée par la diode électroluminescente (6) placée à une distance D de l'extrémité basse de la première partie (7) de l'aiguille (3) ayant une valeur maximum de

$$\frac{D}{2.\tan\left(\frac{\alpha}{2}\right)}.$$ Cette valeur est explicitée en figure 4. Ce composant de type CMS, non encapsulé, soudé sur le circuit imprimé (4) est placée directement sous l'axe creux (5). Il peut être envisagé de placer une diode (6) non CMS encapsulée et de forme ogivale, sur le circuit imprimé (4). La première partie (7) de l'aiguille (3) présente ainsi une surface de collection de la lumière qui présente elle-même une section comprise entre 2.6 et 5.5 mm pour une collection optimale de la lumière produite par la diode (6). L'actionneur (2) présente un entre-axe (9) qui a une valeur classique pour ce type d'actionneur (3) connu de l'état de l'art actuel. Le rapport entre le diamètre intérieur de l'arbre creux (5) et le diamètre intérieur du palier recevant l'arbre (5) est supérieur à 0.9, ce qui permet de garantir que le diamètre plus important de l'axe (3) n'est pas une gêne pour placer un train d'engrenages équivalent dans l'entre axe (9) alloué et fixe. De manière avantageuse mais non limitative, le diamètre intérieur de l'axe creux (5) peut être revêtu d'une peinture ou dépôt ayant un fort pouvoir réfléchissant de façon à limiter la dissipation de lumière éventuelle par les rayons frappant l'intérieur de l'axe creux (5).

La figure 4 présente une vue en coupe schématique d'un module indicateur (1) décrit par la présente invention, et plus particulièrement une vue isolée de la source de lumière (6), placée sur un circuit imprimé (4), et de la première partie (7) de l'aiguille (3). La source de lumière émet un rayonnement sur un angle α et la partie inférieure de l'aiguille (3) a un diamètre D donné. L'optimum de lumière émise par la source (6) dans la partie (7) est alors pour une distance H de la partie (7) à la source (6) au maximum égale à $$\frac{D}{2.\tan\left(\frac{\alpha}{2}\right)}.$$

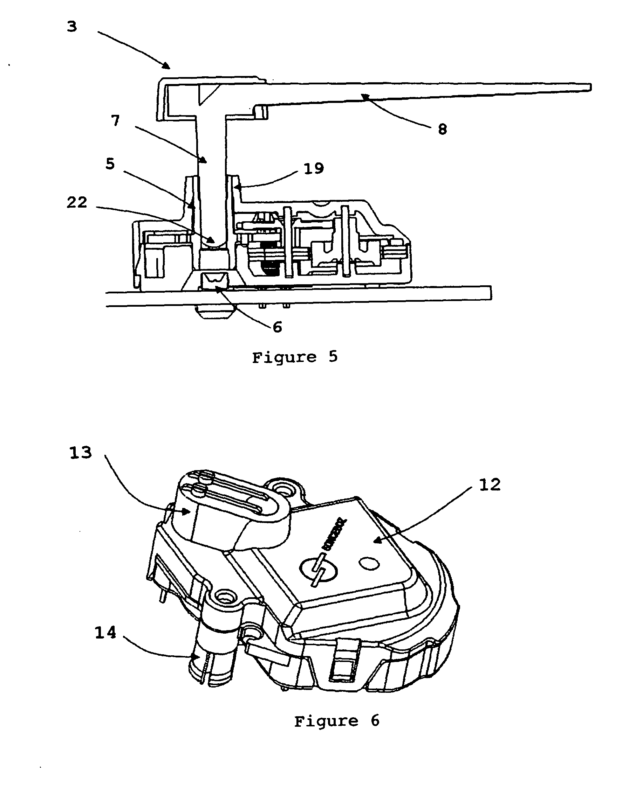

La figure 5 présente une coupe d'un module (1) réalisé avec un actionneur (2) suivant le mode de réalisation de la figure 1.

On y retrouve une aiguille mono pièce qui présente une première partie (7) venant se placer dans un axe creux (5) via la protubérance (19) située sur la partie supérieure de l'actionneur (2). La première partie (7) est une partie de type cylindrique ayant un diamètre compris entre 2.6 et 5.5 mm et son extrémité présente de manière avantageuse, mais nullement limitative, une forme bombée ou ménisque. Cette forme particulière permet aux rayons lumineux émis par la LED (6) de rester focalisés parallèles à l'axe de la première partie (7) et limite ainsi le nombre de rayon lumineux venant frapper l'intérieur de l'axe creux (5) ne participant pas à l'illumination de l'axe.

La figure 6 montre l'aspect extérieur de l'actionneur (2) dans un mode troisième mode de réalisation dans lequel le capot (12) comprend une diode encapsulée de forme ogivale soudée directement à l'intérieur du capot (12) dans un logement (13) prévu à cet effet.

L'actionneur (2) présente des pattes de fixation (14) prévus aptes à venir se fixer sur le circuit imprimé (4) pour un maintien mécanique de l'actionneur (2). Dans ce mode de réalisation, l'actionneur (2) est alors monté en montage dit arrière, c'est-à-dire avec l'aiguille (3) sortant sur la face inférieure de l'actionneur (2).

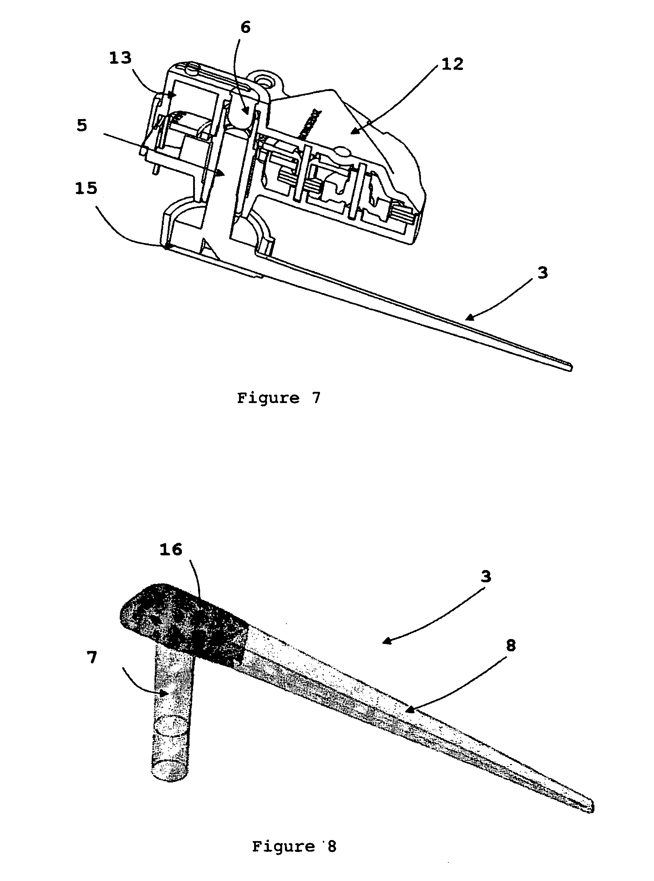

La figure 7 détaille l'intérieur de l'actionneur (2) dans ce mode de réalisation. La diode électroluminescente (6) est une diode encapsulée directement placé sous l'arbre creux (5) pour une illumination optimale de l'aiguille (3). Dans ce mode de réalisation, l'aiguille (3) connectée présente classiquement un capuchon (15) en matériau plastique.

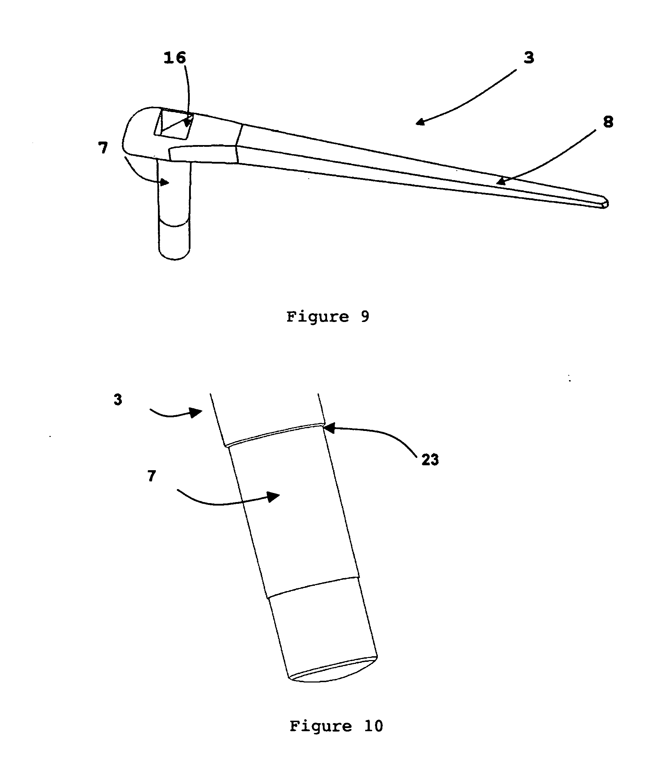

Les figures 8 et 9 montrent une aiguille (3) présentant une pièce unique en un matériau conducteur de lumière, composée d'une première partie (7) destinée à venir se connecter dans l'arbre creux (5) de l'actionneur (2), une deuxième partie (8) s'étendant perpendiculairement à la première partie (7). Sur la figure 8, cette aiguille (3) à pièce unique ne présente pas de capuchon, mais un revêtement noir est déposé à la jointure des deux parties (7) et (8) de manière à ne pas créer une gêne visuelle à l'utilisateur et à minimiser les pertes de lumière par réfraction.

De manière à optimiser le passage de la lumière entre les deux parties (7) et (8) sans créer de perte importante de luminosité, il peut être réalisé une surface de réflexion (16) par dépôt d'une matière aux propriétés de réflexion importantes (type peinture, revêtement ...) ou par abrasion de la surface (16) comme montré en figure 9.

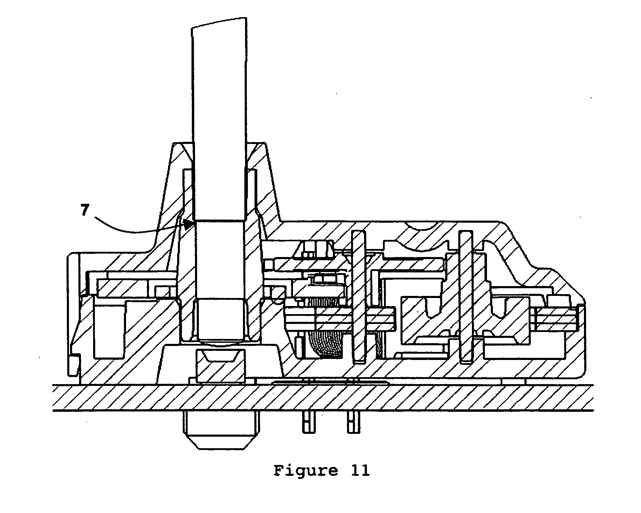

Selon un mode avantageux de réalisation de la présente invention représenté sur les figures 10 et 11, un épaulement (23) est ménagé sur l'axe vertical. La figure 10 montre une vue isolée de la partie basse d'une aiguille (3) présentant ledit épaulement (23) sur sa partie verticale (7). Cet épaulement est adapté à une fonction de positionnement précise de l'aiguille (3) lors de son montage sur le moteur dans l'axe creux (5). Ainsi qu'on peut le voir sur la figure 11, l'épaulement vient en butée à l'intérieur de l'axe creux, ce dernier présentant un chanfrein destiné à recevoir l'épaulement. Est ainsi garantie une distance entre la LED et l'extrémité basse de la première partie (7) de l'aiguille (3) permettant de bénéficier d'une luminance optimale.

## Revendications

1. Module indicateur de tableau de bord comprenant un palier (19), une source lumineuse (6), un indicateur (3) doté d'un axe conducteur de lumière (7) dont une partie inférieure, de diamètre extérieur D, est terminée par une extrémité, et un actionneur rotatif (2) comportant lui-même un train d'engrenages réducteur (10) et un arbre de sortie creux (5) commandant le déplacement de l'indicateur (3), le palier (19) recevant ledit arbre creux (5) et présentant un diamètre intérieur, et la source lumineuse (6) étant disposée sous ladite extrémité de l'axe conducteur (7) et émettant de la lumière en direction de cet axe conducteur dans un angle de rayonnement α, **caractérisé :**

   - **en ce que** l'arbre creux (5) présente une surface intérieure réfléchissante ;
   - **en ce que** le diamètre extérieur D de la partie inférieure de l'axe conducteur (7) est compris entre 2.6 et 5.5 millimètres ;
   - **en ce que** le rapport entre le diamètre intérieur de l'arbre creux (5) et le diamètre intérieur dudit palier (19) est supérieur à 0.9 ; et
   - **en ce que** la source lumineuse (6) est disposée à une distance H de ladite extrémité de l'axe conducteur (7) au maximum égale à

$$\frac{D}{2.\tan\left(\dfrac{\alpha}{2}\right)}.$$

2. Module indicateur de tableau de bord suivant la revendication 1, **caractérisé en ce que** l'axe conducteur de lumière (7) présente un épaulement (23) venant en contact avec une partie supérieure de l'arbre creux (5).

3. Module indicateur de tableau de bord suivant la revendication 1 ou 2, **caractérisé en ce que** l'indicateur (3) est constitué par une pièce unique moulée en une matière unique, présentant une première partie (7) formant ledit axe conducteur de lumière et permettant l'accouplement avec ledit arbre creux (5) de l'actionneur, et une deuxième partie (8) s'étendant sensiblement perpendiculairement à la première partie (7).

4. Module indicateur de tableau de bord selon l'une quelconque des revendications précédentes, **caractérisé en ce que** l'extrémité de l'axe conducteur (7) présente une surface bombée en forme de ménisque.

5. Module indicateur de tableau de bord selon l'une quelconque des revendications précédentes, **caractérisé en ce que** la source lumineuse (6) est constituée par une diode électroluminescente.

6. Module indicateur de tableau de bord selon la revendication précédente, **caractérisé en ce que** ladite diode électroluminescente est une diode non encapsulée soudée directement sur le circuit imprimé de commande de l'actionneur (2) par une méthode de type CMS.

7. Module indicateur de tableau de bord selon l'une quelconque des revendications 1 à 6, **caractérisé en ce que** la source lumineuse (6) est constituée par une diode électroluminescente de forme ogivale disposée dans l'arbre creux (5).

8. Module indicateur de tableau de bord selon la revendication précédente, **caractérisé en ce que** ladite diode électroluminescente est une diode encapsulée placée dans un capot moteur du module.

9. Module indicateur de tableau de bord selon la revendication 3 combinée à la revendication précédente, **caractérisé en ce que** la deuxième partie (8) de l'indicateur (3) est prolongée par une partie recourbée délimitant un espace pour le passage du bord d'un cadran.

**10.** Module indicateur de tableau de bord selon la revendication 3 combinée à l'une quelconque des revendications 6 et 7, **caractérisé en ce que** ledit indicateur (3) présente au moins un changement d'orientation disposé entre ses première et deuxième parties (7, 8), et une zone inclinée de réflexion lumineuse au niveau de chaque changement d'orientation.

**11.** Module indicateur de tableau de bord selon la revendication précédente, **caractérisé en ce que** ladite zone inclinée de réflexion lumineuse est réalisée par abrasion de la surface dudit indicateur (3).

**12.** Module indicateur de tableau de bord selon la revendication 10, **caractérisé en ce que** ladite zone inclinée de réflexion lumineuse est réalisée par dépôt d'une matière.

**Claims**

**1.** Dashboard indicator module comprising a bearing (19), a light source (6), an indicator (3) furnished with a light-conducting spindle (7) a lower portion of which, with external diameter D, is terminated by an end, and a rotary actuator (2) itself comprising a reduction gear train (10) and a hollow output shaft (5) controlling the movement of the indicator (3), the bearing (19) receiving the said hollow shaft (5) and having an inner diameter, and the light source (6) being placed beneath the said end of the conducting spindle (7) and emitting light in the direction of this conducting spindle in an angle of radiation α, **characterized:**

> - **in that** the hollow shaft (5) has a reflective inner surface;
> - **in that** the external diameter D of the lower portion of the conducting spindle (7) is between 2.6 and 5.5 millimetres;
> - **in that** the ratio between the inner diameter of the hollow shaft (5) and the inner diameter of the said bearing (19) is greater than 0.9; and
> - **in that** the light source (6) is placed at a distance H from the said end of the conducting spindle (7) that is at most equal to $\dfrac{D}{2.\tan\left(\frac{\alpha}{2}\right)}$.

**2.** Dashboard indicator module according to Claim 1, **characterized in that** the light-conducting spindle (7) has a shoulder (23) coming into contact with an upper portion of the hollow shaft (5).

**3.** Dashboard indicator module according to Claim 1 or 2, **characterized in that** the indicator (3) consists of a single part moulded in a single material, having a first portion (7) forming the said light-conducting spindle and allowing the coupling of the actuator with the said hollow shaft (5), and a second portion (8) extending substantially perpendicularly to the first portion (7).

**4.** Dashboard indicator module according to any one of the preceding claims, **characterized in that** the end of the conducting spindle (7) has a curved surface in the form of a meniscus.

**5.** Dashboard indicator module according to any one of the preceding claims, **characterized in that** the light source (6) consists of a light-emitting diode.

**6.** Dashboard indicator module according to the preceding claim, **characterized in that** the said light-emitting diode is a non-encapsulated diode which is soldered directly, by an SMC method, to the printed circuit for controlling the actuator (2).

**7.** Dashboard indicator module according to any one of Claims 1 to 6, **characterized in that** the light source (6) consists of a light-emitting diode of ogival shape placed in the hollow shaft (5).

**8.** Dashboard indicator module according to the preceding claim, **characterized in that** the said light-emitting diode is an encapsulated diode placed in a motor cover of the module.

**9.** Dashboard indicator module according to Claim 3 combined with the preceding claim, **characterized in that** the second portion (8) of the indicator (3) is extended by a curved portion delimiting a space for the passage of the edge of a dial.

**10.** Dashboard indicator module according to Claim 3 combined with either one of Claims 6 and 7, **characterized in that** the said indicator (3) has at least one change of orientation placed between its first and second portions (7, 8), and an inclined light-reflective zone at each change of orientation.

**11.** Dashboard indicator module according to the preceding claim, **characterized in that** the said inclined light-reflecting zone is made by abrasion of the surface of the said indicator (3).

**12.** Dashboard indicator module according to Claim 10, **characterized in that** the said inclined light-reflecting zone is made by deposition of a material.

**Patentansprüche**

**1.** Anzeigemodul für ein Armaturenbrett, mit einem Lager (19), einer Leuchtquelle (6), einem Zeiger (3), der mit einer Lichtleiterachse (7) versehen ist, deren unterer Teil mit einem Ende mit einem Außendurchmesser D abschließt, und einem drehbaren Stellglied (2), das ein Untersetzungsgetriebe (10) und eine hohle Ausgangswelle (5) umfasst, welche die Verstellung des Zeigers (3) steuern, wobei das Lager (19) die Hohlwelle (5) aufnimmt und einen Innendurchmesser aufweist und die Leuchtquelle (6) unter dem Leiterachsenende (7) angeordnet ist und Licht in Richtung dieser Leiterachse in einem Strahlungswinkel $\alpha$ abgibt, **dadurch gekennzeichnet:**

- **dass** die Hohlwelle (5) eine reflektierende Innenfläche aufweist;
- **dass** der Außendurchmesser D des unteren Teils der Leiterachse (7) zwischen 2,6 und 5,5 Millimeter beträgt;
- **dass** das Verhältnis zwischen dem Innendurchmesser der Hohlwelle (5) und dem Innendurchmesser des Lagers (19) größer 0,9 beträgt; und
- **dass** die Leuchtquelle (6) in einem Abstand H von dem Leiterachsenende (7) von maximal

$$\frac{D}{2.\tan\left(\frac{a}{2}\right)}$$ angeordnet ist.

2. Anzeigemodul für ein Armaturenbrett nach Anspruch 1, **dadurch gekennzeichnet, dass** die Lichtleiterachse (7) eine Schulter (23) aufweist, die mit einem oberen Bereich der Hohlwelle (5) in Kontakt kommt.

3. Anzeigemodul für ein Armaturenbrett nach Anspruch 1 oder 2, **dadurch gekennzeichnet, dass** der Zeiger (3) aus einem einzigen Stück gebildet wird, das aus einem einzigen Material geformt ist, aufweist einen ersten Bereich (7), der die Lichtleiterachse bildet und eine Ankopplung mit der Hohlwelle (5) des Stellgliedes ermöglicht, und einen zweiten Bereich (8), der sich im Wesentlichen senkrecht zu dem ersten Bereich (7) erstreckt.

4. Anzeigemodul für ein Armaturenbrett nach einem der vorhergehenden Ansprüche, **dadurch gekennzeichnet, dass** das Leitachsenende (7) eine meniskusförmig gewölbte Fläche aufweist.

5. Anzeigemodul für ein Armaturenbrett nach einem der vorhergehenden Ansprüche, **dadurch gekennzeichnet, dass** die Leuchtquelle (6) durch eine Elektrolumineszenzdiode gebildet wird.

6. Anzeigemodul für ein Armaturenbrett nach dem vorhergehenden Anspruch, **dadurch gekennzeichnet, dass** die Elektrolumineszenzdiode eine nicht eingekapselte Diode ist, die durch ein CMS Verfahren direkt auf die gedruckte Schaltung zur Steuerung des Stellgliedes (2) gelötet ist.

7. Anzeigemodul für ein Armaturenbrett nach einem der Ansprüche 1 bis 6, **dadurch gekennzeichnet, dass** die Leuchtquelle (6) durch eine spitzbogenförmige Elektrolumineszenzdiode gebildet wird, die in der Hohlwelle (5) angeordnet ist.

8. Anzeigemodul für ein Armaturenbrett nach dem vorhergehenden Anspruch, **dadurch gekennzeichnet, dass** die Elektrolumineszenzdiode eine eingekapselte Diode ist, die in einer Motorabdeckung des Moduls angeordnet ist.

9. Anzeigemodul für ein Armaturenbrett nach Anspruch 3, kombiniert mit dem vorhergehenden Anspruch, **dadurch gekennzeichnet, dass** der zweite Bereich (8) des Zeigers (3) durch einen umgebogenen Bereich verlängert ist, welcher einen Raum für den Durchgang des Randes eines Ziffernblattes begrenzt.

10. Anzeigemodul für ein Armaturenbrett nach Anspruch 3, kombiniert mit einem der Ansprüche 6 und 7, **dadurch gekennzeichnet, dass** der Zeiger (3) aufweist wenigstens eine Orientierungsänderung, die zwischen seinem ersten und zweiten Bereich (7, 8) angeordnet ist, und eine schräge Lichtreflektionszone an jeder Orientierungsänderung.

11. Anzeigemodul für ein Armaturenbrett nach dem vorhergehenden Anspruch, **dadurch gekennzeichnet, dass** die schräge Lichtreflektionszone durch Abschleifung der Oberfläche des Zeigers (3) hergestellt ist.

12. Anzeigemodul für ein Armaturenbrett nach Anspruch 10, **dadurch gekennzeichnet, dass** die schräge Lichtreflektionszone durch Ablagerung eines Materials hergestellt ist.

Figure 1

Figure 2

Figure 3

$$H = \frac{D}{2 \tan\left(\frac{\alpha}{2}\right)}$$

Figure 4

3

7

5

22

19

8

6

Figure 5

13

12

14

Figure 6

Figure 7

Figure 8

Figure 9

Figure 10

Figure 11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1519159 A
- EP 00679871 A
- WO 00138120 A